# EUROPÄISCHE PATENTSCHRIFT

(11) **EP 0 627 546 B1**
(45) Veröffentlichungstag und Bekanntmachung des Hinweises auf die Patenterteilung: **23.10.1996**
(21) Anmeldenummer: 94107572.3
(22) Anmeldetag: 17.05.1994
(51) Int. Cl.: F01L 3/08

(54) **Ventilschaftdichtung**
Valve stem seal
Joint d'étanchéité de queue de soupape

(30) Priorität: 19.05.1993 FR 9306040
(43) Veröffentlichungstag der Anmeldung: 07.12.1994
(73) Patentinhaber: Firma Carl Freudenberg, D-69469 Weinheim (DE)
(72) Erfinder: Devouassoux, Serge, F-52200 Langres (FR); Massotte, Joel, F-52500 Corgirnon (FR)

(56) Entgegenhaltungen:
- EP-A- 0 285 791
- EP-A- 0 380 770
- EP-A- 0 392 893
- EP-A- 0 434 988
- DE-A- 1 928 245
- DE-A- 3 400 314
- DE-C- 873 640
- FR-A- 1 245 461
- FR-A- 1 576 621
- US-A- 4 811 960

## Beschreibung

Die Erfindung betrifft eine Ventilschaftdichtung, umfassend ein formbeständiges Rohr, das an dem einen Ende durch einen radial nach außen vorstehenden, ersten Flansch begrenzt ist und an dem anderen Ende durch einen Zylinderabschnitt, in den parallel zu der Achse des Rohres ein Dichtring selbsthemmend eingefügt ist, der mit dem Außenumfang einer den Ventilschaft umschließenden, rohrförmig ausgebildeten Ventilführung dichtend verpreßbar ist und eine Dichtlippe aufweist, die die Ventilführung in axialer Richtung überragt und den Ventilschaft dichtend berührt, wobei der der Zylinderabschnitt den Dichtring und die Dichtlippe auf der gesamten Länge in axialer Richtung übergreift, wobei die Dichtlippe außenseitig von einer Rille umschlossen ist und wobei eine Andrückfeder in die Rille eingefügt ist.

Eine solche Ventilschaftdichtung ist aus der EP-A-0 285 791 bekannt. Die Ventilschaftdichtung weist einen an dem Ventilschaft anliegenden Dichtteil, einen auf die Ventilführung aufsteckbaren Haftteil und einen ein- oder anvulkanisierten, bevorzugt metallischen Versteifungsring auf. Ferner umfaßt die Ventilschaftdichtung zumindest eine den Ventilschaft konzentrisch umschließende Feder und einen mit dem Ventilschaft zu verbindenden Ventilfederteller. Die Ventilschaftdichtung ist vor der Montage unmittelbar oder mittelbar mit dem Ventilfederteller lösbar verbunden.

Eine weitere Ventilschaftdichtung ist aus der EP-A-0 380 770 bekannt. Sie gelangt an Kolbenkraftmaschinen zur Anwendung und weist eine Dichtlippe auf, die das formbeständige Rohr in axialer Richtung überragt und dadurch besonders gefährdet ist in bezug auf Beschädigungen, die sich während der Lagerung und des Transports einer solchen Ventilschaftdichtung ergeben können. Außerdem geht die die Dichtlippe umschließende und in eine Rille eingefügte Andrückfeder häufig während der Handhabung verloren mit der Folge, daß die Ventilschaftdichtung unbrauchbar wird.

Aus der EP-A-0 392 893 ist eine Ventilschaftdichtung bekannt, bei der ein Dichtring mit einer Außenfläche einer den Ventilschaft umschließenden, rohrförmig ausgebildeten Ventilführung dichtend verpreßt wird. Bei der Außenfläche handelt es sich um die dem Ventilteller abgewandte axiale Stirnseite der Ventilführung. Der Dichtring besteht vollständig aus einem elastomeren Werkstoff und ist unter elastischer Vorspannung innerhalb seines Einbauraums angeordnet. Hinsichtlich gleichbleibend guter Gebrauchseigenschaften während einer langen Gebrauchsdauer ist eine derartige Ausgestaltung wenig zufriedenstellend, da der elastomere Werkstoff des Dichtrings mit zunehmender Gebrauchsdauer relaxiert, die dichtende Anpressung des Dichtrings an den Ventilschaft dadurch verringert wird und Undichtigkeiten die Folge sind.

Der Erfindung liegt die Aufgabe zugrunde, eine Ventilschaftdichtung der eingangs genannten Art derart weiterzuentwickeln, daß eine Beschädigung der Dichtlippe während der Lagerung und des Transport der Ventilschaftdichtung weitestgehend ausgeschlossen ist ohne daß sich nennenswerte Mehrkosten bei der Herstellung ergeben. Die Andrückfeder der Dichtlippe soll außerdem in besserer Weise vor unbeabsichtigten Verlusten geschützt sein als bei der bekannten Ausführung und leicht ersetzbar sein.

Diese Aufgabe wird erfindungsgemäß bei einer Ventilschaftdichtung der eingangs genannten Art durch die kennzeichnenden Merkmale von Anspruch 1 gelöst. Auf vorteilhafte Ausgestaltungen nehmen die Unteransprüche Bezug.

Bei der erfindungsgemäßen Ventilschaftdichtung ist es vorgesehen, daß der Zylinderabschnitt in einem radial nach innen vorstehenden, zweiten Flansch endet und daß die Dichtlippe zur Gewährleistung einer guten Relativbeweglichkeit einen Abstand von dem Zylinderabschnitt und dem zweiten Flansch aufweist. Die Dichtlippe ist durch den im wesentlichen unnachgiebigen Zylinderabschnitt und den zweiten Flansch in ausgezeichneter Weise vor Beschädigungen und einem Verlust der Andrückfeder geschützt ohne daß eine Beeinträchtigung der Relativbeweglichkeit der Dichtlippe in Kauf genommen werden müßte oder eine nennenswerte Erhöhung der sich bei der Herstellung der Ventilschaftdichtung ergebenden Kosten.

Die Dichtlippe ist außenseitig von einer Rille umschlossen, in die die ringförmig ausgebildete Andrückfeder eingefügt ist. Diese kann irgendeiner bekannten Ausführung entsprechen. Sie besteht bevorzugt aus Metall und ist beispielsweise als Ringwendelfeder gestaltet.

Der Dichtring kann aus einem Dichtelement aus elastomerem Werkstoff bestehen sowie aus einem im wesentlichen unnachgiebigen Versteifungsring. Letzte rer umschließt den Dichtring zweckmäßig in dem den Zylinderabschnitt berührenden Teilbereich. Sein Außendurchmesser ist so mit dem Innendurchmesser des Zylinderabschnitts abgestimmt, daß sich nach dem Einfügen aus der Richtung des ersten Flanschs ein Preßsitz des Dichtrings in den Zylinderabschnitt ergibt, der während der Montage und bei der Verwendung der Ventilschaftdichtung in einer Verbrennungskraftmaschine keine nennenswerte Relativverlagerung mehr zuläßt.

Das Dichtelement des Dichtrings kann einstückig ineinander übergehend mit zumindest einer Dichtlippe versehen sein, die für die Abdichtung des relativ beweglichen Ventilschaftes bestimmt ist sowie mit einem weiteren, ringförmigen Dichtungsabschnitt, der mit dem Außenumfang einer den Ventilschaft bestimmungsgemäß aufnehmenden und rohrförmig ausgebildeten Ventilführung dichtend in Eingriff bringbar ist.

Das Einfügen des Dichtrings in das Rohr gestaltet sich besonders einfach, wenn das Rohr zwischen dem Zylinderabschnitt und dem ersten Flansch an zumindest einer Stelle einen kegelig in Richtung des Flansches erweiterten Innendurchmesser aufweist.

Die Ventilschäfte von Verbrennungskraftmaschinen sind üblicherweise am oberen Ende mit zumindest einer scharfkantig eingeschnittenen Rille versehen, über die die Dichtlippe bei der Montage der Ventilschaftdichtung hinweggeführt werden muß. Dabei kann sich eine Beschädigung der Dichtlippe ergeben. Aus diesem Grund ist es zweckmäßig, auf den Ventilschaft vor der Montage der Ventilschaftdichtung eine Schutzglocke aufzustülpen, die die Rille in axialer Richtung übergreift und vor einer Beschädigung durch die scharfen Kanten der Rille schützt. Die Dimensionen der Schutzglocke und des Dichtrings müssen so aufeinander abgestimmt sein, daß ein Hindurchführen der Schutzglocke durch den Dichtring unter Vermeidung von Beschädigungen möglich ist. Die Dichtlippe wird während der Passage der Schutzglocke in radialer Richtung elastisch aufgeweitet. Ihre Elastizität ist so bemessen, daß sich durch die Aufweitung funktionsbeeinträchtigende Beschädigung ergibt.

Eine gegebenenfalls zur Anwendung gelangende Andrückfeder wird bevorzugt in eine die Dichtlippe außenseitig umschließende Rille eingefügt, bevor der Dichtring parallel zu seiner Achse in das formbeständige Rohr eingepreßt wird.

Eine umgekehrte Vorgehensweise bei der Montage ist ebenfalls möglich. Danach ist es gemäß der vorliegenden Erfindung vorgesehen, die Andrückfeder zu montieren oder bei Bedarf auszutauschen, nachdem der Dichtring in das formbeständige Rohr bereits vorausgehend eingepreßt worden ist.

Der Gegenstand der Erfindung wird nachfolgend anhand der Zeichnung weiter verdeutlicht. Es zeigen:
- Fig. 1: eine beispielhafte Ausführung der erfindungsgemäßen Ventilschaftdichtung in halbgeschnittener Darstellung.
- Fig. 2: die Ventilschaftdichtung gemäß Fig. 1 während der Durchführung ihrer Montage.
- Fig. 3: die Ventilschaftdichtung gemäß Fig. 1 im Anschluß an die Montage auf einem Ventilschaft.

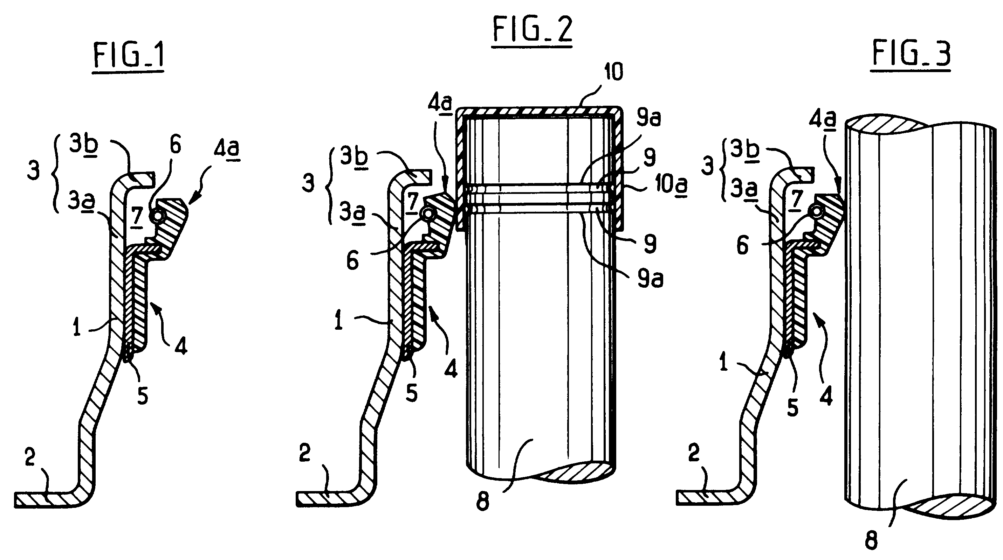

Die in den Fig. 1 bis 3 gezeigte Ventilschaftdichtung umfaßt ein formbeständiges Rohr 1, das an dem einen Ende durch einen radial nach außen vorstehenden, ersten Flansch 2 begrenzt ist und an dem anderen Ende durch einen Zylinderabschnitt 3a, in den parallel zu der Achse des Rohres 1 ein Dichtring 4 selbsthemmend eingefügt ist. Der Dichtring 4 ist mit einer ringförmigen Dichtlippe 4a versehen, die während der bestimmungsgemäßen Verwendung mit dem Außenumfang des abzudichtenden Ventilschafts 8 in Eingriff gelangt sowie mit einem ringförmigen Dichtungsteil, das während der bestimmungsgemäßen Verwendung mit dem Außenumfang einer rohrförmig gestalteten und in der Darstellung nicht gezeigten Ventilführung dichtend verpreßt ist. Die Dichtlippe 4a überragt die Ventilführung nach dem Einbau in axialer Richtung. Sie berührt den Ventilschaft in diesem der Ventilführung axial vorgelagerten Bereich.

Der Zylinderabschnitt 3a des verformungssteifen Rohres 1 der Ventilschaftdichtung übergreift den Dichtring 4 und die Dichtlippe 4a axial auf deren ganzer Länge 3, wobei der Zylinderabschnitt 3a in einem radial nach innen vorstehenden, zweiten Flansch 3b endet und wobei die Dichtlippe 4a zur Gewährleistung einer guten Relativbeweglichkeit einen Abstand von dem Zylinderabschnitt 3a und dem zweiten Flansch 3b aufweist. Die Dichtlippe 4a ist in mehreren Richtungen 3 beweglich. Sie ist auf dem Außenumfang von einer Rille umschlossen, in die eine Andrückfeder 6 eingefügt ist. Diese besteht aus einer Ringwendelfeder aus metallischem Werkstoff. Der Zwischenraum zwischen dem Außenumfang der Dichtlippe 4a und dem Zylinderabschnitt 3b (3a und 3b) ist in Fig. 2 mit 7 bezeichnet.

Die Ventilschaftdichtung gelangt üblicherweise mit senkrecht nach oben zeigender Dichtlippe zur Anwendung. Sie ist hierbei kontinuierlich mit Öl überspült, das sich in dem Zwischenraum sammelt und über einen langen Zeitraum zur Verfügung steht. Bei Ausführungen der gezeigten Art, bei denen die Dichtlippe in einem axialen Abstand von dem stirnseitigen Ende des Hohlzylinders endet, ist sie unter solchen Bedingungen auch auch dann mit Schmieröl benetzt, wenn sich die Kolbenkraftmaschine außer Betrieb befindet. Die Dichtlippe ist dadurch bei einer erneuten Inbetriebnahme der Kolbenkraftmaschine ausgezeichnet geschmiert, was den Verschleiß vermindert und die Gebrauchsdauer vergrößert.

Der Dichtring 4 besteht aus einem Dichtelement aus elastomerem Werkstoff sowie aus einem im wesentlichen unnachgiebigen Versteifungsring 5, der das Dichtelement in dem den Zylinderabschnitt 3a des Rohres 1 berührenden Bereich in radialer Richtung außenseitig umschließt. Der Versteifungsring 5 ist radial innenseitig mit einer in Umfangsrichtung durchgehend ausgebildeten Beschichtung aus Gummi versehen, die bei der Montage der Ventilschaftdichtung mit dem Außenumfang einer rohrförmig gestalteten Ventilschaftführung dichtend verpreßbar ist. Die Ventilschaftführung ist in der Zeichnung nicht dargestellt.

Der Außendurchmesser des im wesentlichen unnachgiebigen Versteifungsringes ist so auf den Innendurchmesser des Zylinderabschnitts 3a abgestimmt, daß sich zwischen den beiden eine Preßpassung ergibt. Hierdurch ist im Anschluß an das Einfügen des Dichtringes 4 in das formbeständige Rohr 1 ein Sitz gewährleistet, der eine Relativverlagerung mit hinreichender Sicherheit verhindert, wenn die Ventilschaftdichtung manipuliert, montiert oder verwendet wird.

Der Versteifungsring 5 überragt das elastische Dichtelement am unteren Ende. Hierdurch ist ein axial gerichtetes Einpressen des Dichtringes in das formbeständige Rohr bis zu einer definierten Stelle möglich, ohne daß sich eine Beschädigung des Dichtelementes oder eine Rückfederung des Dichtrings ergibt. Das Einpressen kann daher unter Verwendung von Automaten erfolgen.

Das Rohr 1 ist zwischen dem Zylinderabschnitt 3a und dem ersten Flansch 2 an einer Stelle mit einem kegelig in Richtung des ersten Flansches erweiterten Innendurchmesser versehen. Das Einfügen des Dichtringes in das Rohr 1 ist hierdurch stark vereinfacht. Sowohl das Rohr 1 als auch der Versteifungsring 5 des Dichtringes 4 können durch tiefgezogene Stahlblechteile gebildet sein.

Das Dichtelement des Dichtringes 4 besteht bei dem gezeigten Ausführungsbeispiel aus einem elastomeren Werkstoff, beispielsweise aus Gummi. Hiervon abweichende Dichtungswerkstoffe können bedarfsweise ebenfalls zur Anwendung gelangen.

Der abzudichtende Ventilschaft 8 besteht in bekannter Weise aus metallischem Werkstoff. Er ist im Bereich seines oberen Endes zumeist mit zwei in axialer Richtung aufeinanderfolgenden Rillen 9 versehen, die in axialer Richtung beiderseits durch scharfkantig auslaufende Stirnflächen 9a begrenzt sind. Um zu verhindern, daß die Dichtlippe 4a des Dichtringes 4 beim axialen Hinwegführen über die Rillen 9 durch deren Kanten beschädigt wird, ist es gemäß Fig. 2 vorgesehen, zuvor auf das obere Ende des Ventilschafts 8 eine tassenförmig ausgebildete Schutzglocke 10 aufzustülpen, die die Rillen 9 überlappt und so dimensioniert ist, daß der Dichtring 4 unter elastischer Aufweitung seiner Dichtlippe 3 beschädigungsfrei darüber hinweggeführt werden kann. Die Dichtlippe 4a gelangt anschließend in unmittelbaren Berührungskontakt zu dem abzudichtenden Ventilschaft 8, wie in Fig. 3 gezeigt. Die Schutzglocke 10, die bevorzugt aus einem polymeren Werkstoff besteht, wird anschließend entfernt. Ihre Wandstärke 10a ist so bemessen, daß eine radiale Überdehnung der Dichtlippe 4a nicht zu befürchten ist.

Die erfindungsgemäße Ventilschaftdichtung kann in gleicher Weise verwendet werden wie in den bisher bekannten Ausführungen. Sie kann darüber hinaus unter Benutzung des einschlägig bekannten Fachwissens modifiziert werden, um besonderen Gegebenheiten des speziellen Anwendungsfalles noch besser gerecht zu werden.

## Patentansprüche

1. Ventilschaftdichtung, umfassend ein formbeständiges Rohr (1), das an dem einen Ende durch einen radial nach außen vorstehenden, ersten Flansch (2) begrenzt ist und an dem anderen Ende durch einen Zylinderabschnitt (3a), in den parallel zu der Achse des Rohres (1) ein Dichtring (2) selbsthemmend eingefügt ist, der mit dem Außenumfang einer den Ventilschaft umschließenden, rohrförmig ausgebildeten Ventilführung dichtend verpreßbar ist und eine Dichtlippe (4) aufweist, die die Ventilführung in axialer Richtung überragt und den Ventilschaft dichtend berührt, wobei der Zylinderabschnitt (3a) den Dichtring und die Dichtlippe (4a) auf der gesamten Länge in axialer Richtung übergreift, wobei die Dichtlippe (4a) außenseitig von einer Rille umschlossen ist und wobei eine Andrückfeder (6) in die Rille eingefügt ist, dadurch gekennzeichnet, daß der Zylinderabschnitt in einem radial nach innen vorstehenden, zweiten Flansch (3b) endet und daß die Dichtlippe (4a) zur Gewährleistung einer guten Relativbeweglichkeit einen Abstand von dem Zylinderabschnitt (3a) und dem zweiten Flansch (3b) aufweist.

2. Ventilschaftdichtung nach Anspruch 1, dadurch gekennzeichnet, daß der Dichtring (4) aus einem Dichtelement aus elastomerem Werkstoff besteht sowie aus einem im wesentlichen unnachgiebigen Versteifungsring (5).

3. Ventilschaftdichtung nach zumindest einem der Ansprüche 1 bis 2, dadurch gekennzeichnet, daß das Rohr zwischen dem Zylinderabschnitt (3a) und dem ersten Flansch (2) an zumindest einer Stelle einen kegelig in Richtung des ersten Flansches (2) erweiterten Innendurchmesser aufweist.

## Claims

1. A valve stem seal comprising a dimensionally stable tube (1) which is bounded at one end by a first flange (2) which projects radially outwards and at the other end by a cylindrical section (3a) into which there is inserted, parallel to the axis of the tube (1) and in a self-locking manner, a sealing ring (2) which can be pressed sealingly against the outer circumference of a valve guide of tubular design surrounding the valve stem and has a sealing lip (4) which projects beyond the valve guide in the axial direction and touches the valve stem in a sealing manner, the cylindrical section (3a) overlapping the sealing ring and the sealing lip (4a) over their entire length in the axial direction, the sealing lip (4a) being surrounded on the outside by a groove, and a garter spring (6) being inserted into the groove, characterized in that the cylindrical section ends in a radially inward-projecting second flange (3b) and in that, to ensure good relative mobility, the sealing lip (4a) has a clearance from the cylindrical section (3a) and the second flange (3b).

2. A valve stem according to claim 1, characterized in that the sealing ring (4) is composed of a sealing element made of elastomeric material and an essentially unyielding reinforcing ring (5).

3. A valve stem seal according to either of claims 1 and 2, characterized in that, between the cylindrical section (3a) and the first flange (2), the tube has an inside diameter which is widened conically in the direction of the first flange (2) at at least one point.

## Revendications

1. Joint d'étanchéité de queue de soupape, comprenant un tube (1) résistant à la déformation qui est limité à l'une des extrémités par une première bride (2) faisant saillie radialement vers l'extérieur et à l'autre extrémité par un tronçon cylindrique (3a), dans lequel est inséré à blocage automatique, parallèlement à l'axe du tube (1), un anneau d'étanchéité (2) susceptible d'être comprimé de manière étanche avec la circonférence extérieure d'un guide-soupape réalisé en forme de tube et enveloppant la queue de soupape, et présentant une lèvre d'étanchéité (4) qui dépasse le guide-soupape dans le sens axial et touche la queue de soupape de manière étanche, le tronçon cylindrique (3a) recouvrant l'anneau d'étanchéité et la lèvre d'étanchéité (4a) sur toute la longueur dans le sens axial, la lèvre d'étanchéité (4a) étant entourée sur la face externe d'une rainure et un ressort-presseur (6) étant inséré dans la rainure, caractérisé en ce que le tronçon cylindrique se termine par une deuxième bride (3b) faisant saillie radialement vers l'intérieur et en ce que la lèvre d'étanchéité (4a) est distancée du tronçon cylindrique (3a) et de la deuxième bride (3b), afin de garantir une bonne mobilité relative.

2. Joint d'étanchéité de queue de soupape selon la revendication 1, caractérisé en ce que l'anneau d'étanchéité (4) se compose d'un élément d'étanchéité en matériau élastomère ainsi que d'un anneau raidisseur (5) substantiellement inflexible.

3. Joint d'étanchéité de queue de soupape selon au moins l'une des revendications 1 et 2, caractérisé en ce que le tube entre le tronçon cylindrique (3a) et la première bride (2) présente à au moins un endroit un diamètre intérieur élargi coniquement en direction de la première bride (2).
